# EUROPÄISCHE PATENTSCHRIFT

(11) **EP 4 193 892 B1**
(45) Veröffentlichungstag und Bekanntmachung des Hinweises auf die Patenterteilung: **27.08.2025**
(21) Anmeldenummer: 22208073.1
(22) Anmeldetag: 17.11.2022
(51) Int. Cl.: A47J 37/07

(54) **OUTDOOR-GRILL**
OUTDOOR GRILL
GRIL EXTÉRIEUR

(30) Priorität: 08.12.2021 DE 102021213974
(43) Veröffentlichungstag der Anmeldung: 14.06.2023
(73) Patentinhaber: RÖSLE GROUP GmbH, 87616 Marktoberdorf (DE)
(72) Erfinder: Port, Christian, 86875 Waal (DE); Jung, David, 87439 Kempten (DE)
(74) Vertreter: Dr. Weitzel & Partner

(56) Entgegenhaltungen:
- US-A- 6 114 666
- US-A1- 2020 063 970
- US-B1- 6 213 006
- US-B1- 8 839 780

## Beschreibung

Die vorliegende Erfindung betrifft einen Outdoor-Grill, insbesondere Gasgrill, gemäß dem Anspruch 1.

Outdoor-Grills erfreuen sich einer zunehmenden Beliebtheit, insbesondere in Form von Gasgrills in Privathaushalten und im Rahmen von Betriebsveranstaltungen auch in Unternehmen. Wenn ein solcher Outdoor-Grill als Gasgrill ausgeführt ist, so können damit lange Anglühzeiten vermieden werden und rasch verschiedene Temperaturniveaus, insbesondere in verschiedenen Temperaturzonen, zur Verfügung gestellt werden, die ein besonders luxuriöses Grillerlebnis bieten.

Eine lästige Arbeit, die bei Outdoor-Grills verbleibt, ist die Reinigung des Outdoor-Grills nach der Nutzung. Zur Erleichterung können die Outdoor-Grills nach der Zubereitung des Essens auf ihre volle Leistung eingestellt werden, sodass sich der Grillrost und die sich in der Umgebung der Brenner befindlichen Teile so stark erhitzen, dass an ihnen anhaftende Speisereste verkohlen. Die verkohlten Speisereste können dann mit einer Bürste abgebürstet werden. Trotzdem verbleiben Bauteile, die gereinigt werden müssen, beispielsweise Fettwannen und nicht im unmittelbaren Hitzebereich angeordnete mit Speiseresten oder Fett beschmutzte Flächen. Fettwannen weisen dabei den zusätzlichen Nachteil auf, dass das in ihnen aufgefangene Fett zumindest im heißen Zustand bei nicht rechtzeitiger Entleerung der Fettwanne oder bei Bewegen der Fettwanne überlaufen kann.

US 1 114 666 A offenbart einen Outdoor-Grill mit den im Oberbegriff von Anspruch 1 zusammengefassten Merkmalen.

Der vorliegenden Erfindung liegt die Aufgabe zugrunde, einen Outdoor-Grill, insbesondere Gasgrill, anzugeben, bei dem der Reinigungsaufwand reduziert ist und die Gefahr eines unbeabsichtigten Austretens von heißem, flüssigem Fett gemindert wird.

Die erfindungsgemäße Aufgabe wird durch einen Outdoor-Grill mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Outdoor-Grill, der insbesondere als Gasgrill ausgeführt ist, weist ein Untergestell und einen auf dem Untergestell angeordneten Garraum auf. Es ist wenigstens ein Infrarotbrenner mit einem über dem Infrarotbrenner angeordneten Grillrost vorgesehen, wobei der Infrarotbrenner einen infrarotwärmeabstrahlenden Thermoblock umfasst, der mit einer dem Grillrost zugewandten Thermoblockoberseite unter dem Grillrost positionieren ist, wobei die Fläche der Thermoblockoberseite kleiner als die vom Grillrost überdeckte Fläche ist. Der Infrarotbrenner ist bevorzugt als gasbetriebener Infrarotbrenner ausgeführt.

Erfindungsgemäß ist zwischen dem Grillrost und dem Thermoblock ein Trichter vorgesehen, der sich in Richtung vom Grillrost zum Thermoblock verjüngt und eine dem Thermoblock zugewandte Austrittsfläche aufweist, die gleich groß oder kleiner als die Fläche der Thermoblockoberseite ist und vollständig von der Thermoblockoberseite überdeckt wird. Mit anderen Worten, der vom Trichter umschlossene Kanal nimmt in seinem Querschnitt von seinem grillrostseitigen Einlass zu seinem thermoblockseitigen Auslass ab und leitet sämtliches in ihn eintretendes Fett in Richtung auf die Thermoblockoberseite, sodass kein Fett mehr neben den Thermoblock tropfen kann. Dies schließt nicht aus, dass einzelne Fetttropfen im Trichter hängenbleiben.

Der umschlossene Kanal wird vorteilhaft vollumfänglich von Seitenwänden begrenzt, die schräg, als weder senkrecht noch horizontal angeordnet sind, zumindest im Abschnitt der Verjüngung.

Durch die Erfindung wird das Fett aus den auf dem Grillrost gegarten Speisen gezielt auf den Thermoblock geleitet, der beispielsweise eine Temperatur von mehr als 600° C, 700° C oder 800° C aufweist, wo das Fett dann rückstandslos verbrennt. Dabei wird auch solches Fett durch den Trichter aufgefangen, das aus Flächenbereichen des Grillrostes heruntertropft, die in einer Draufsicht auf den Grillrost außerhalb des Thermoblocks beziehungsweise außerhalb von dessen Oberseite angeordnet sind. Mit dem Trichter kann auch Wärme besser unterhalb des Grillrostes gehalten werden.

Bevorzugt weist der Trichter eine dem Grillrost zugewandte Eintrittsfläche auf, die größer ist als oder gleich ist wie die vom Grillrost überdeckte Fläche. Damit wird sichergestellt, dass der Trichter sämtliches vom Grillrost heruntertropfendes Fett erfasst.

Der Trichter kann mit Abstand zu dem Thermoblock angeordnet sein, sodass er vor einem zu großen Hitzeeintrag geschützt ist. Bevorzugt berührt der Trichter jedoch den Thermoblock im Bereich seiner Austrittsfläche. Dadurch kann die Austrittsfläche wenigstens annähernd oder genau so groß wie die Thermoblockoberseite gestaltet sein, ohne dass die Gefahr besteht, dass Fett oder Öl seitlich am Thermoblock vorbei läuft.

Der Thermoblock ist insbesondere aus Keramik hergestellt und kann eine Vielzahl von mit Brenngas durchströmten Kanälen aufweisen.

Besonders bevorzugt ist der Trichter und insbesondere auch der Grillrost herausnehmbar im Outdoor-Grill eingesetzt. Dadurch sind sie leichter zu reinigen, beispielsweise in einer Geschirrspülmaschine.

Der Outdoor-Grill ist insbesondere frei von einer unter dem Thermoblock positionierten herausnehmbaren Fettauffangwanne. Insbesondere ist überhaupt keine Fettauffangwanne unter dem Thermoblock vorgesehen.

Erfindungsgemäß weist der Outdoor-Grill einen Seitentisch auf, in dem der Infrarotbrenner vorgesehen ist.

Der Seitentisch ist um eine Horizontalachse verschwenkbar gelenkig wenigstens mittelbar am Untergestell angeschlossen. Dabei ist er aus einer horizontalen Gebrauchsposition in eine im Wesentlichen vertikale Verstauposition verschwenkbar. Die Verstauposition kann zum Beispiel um einen Winkel von mehr als 70 Grad oder 80 Grad gegenüber der Gebrauchsposition versetzt sein. Insbesondere ergibt sich die Verstauposition durch ein Verschwenken des Seitentischs aus der Gebrauchsposition nach oben.

Der gelenkige Anschluss kann auch an einer Wand des Garraums vorgesehen sein, die mit dem Untergestell verbunden beziehungsweise auf diesem angeordnet ist.

Die Erfindung vermeidet mit im verschwenkbaren Seitentisch integrierten Infrarotbrenner, dass Fett beim Verschwenken des Seitentischs aus dem Seitentisch austritt.

Bevorzugt ist im Garraum wenigstens ein Hauptbrenner oder eine Vielzahl von Hauptbrennern unter einer ersten Grillfläche vorgesehen und der Grillrost über dem Infrarotbrenner bildet eine zweite Grillfläche aus. Somit kann der Infrarotbrenner auch als Zusatzbrenner bezeichnet werden.

Der Trichter kann zum Beispiel eine rechteckige Austrittsfläche und insbesondere auch eine rechteckige Eintrittsfläche aufweisen. Damit ist er besonders für einen Grillrost mit von diesem bedeckter rechteckiger Fläche und besonders für einen Thermoblock mit rechteckiger Thermoblockoberseite geeignet.

Um den Trichter in einem Geschirrspüler reinigen zu können, ist dieser bevorzugt aus einem geschirrspülmaschinenfesten Material hergestellt oder vollumfänglich mit einem solchen Material beschichtet.

Bevorzugt weist der Trichter einen radial nach außen vorstehenden umlaufenden Rand oder einzelne radial nach außen vorstehende Vorsprünge auf, mit welchem/welchen er im Outdoor-Grill, insbesondere im Seitentisch, gelagert ist. Beispielsweise ist der umlaufende Rand oder sind die Vorsprünge am oberen Ende des Trichters vorgesehen.

Die Erfindung soll nachfolgend anhand eines Ausführungsbeispiels und den Figuren exemplarisch beschrieben werden.

Es zeigen:
- Figur 1: einen erfindungsgemäßen Outdoor-Grill mit einem Infrarotbrenner in einem Seitenteil;
- Figur 2: das Seitenteil aus der Figur 1 mit eingesetztem Trichter;
- Figur 3: das Seitenteil aus der Figur 1 mit herausgenommenem Trichter.

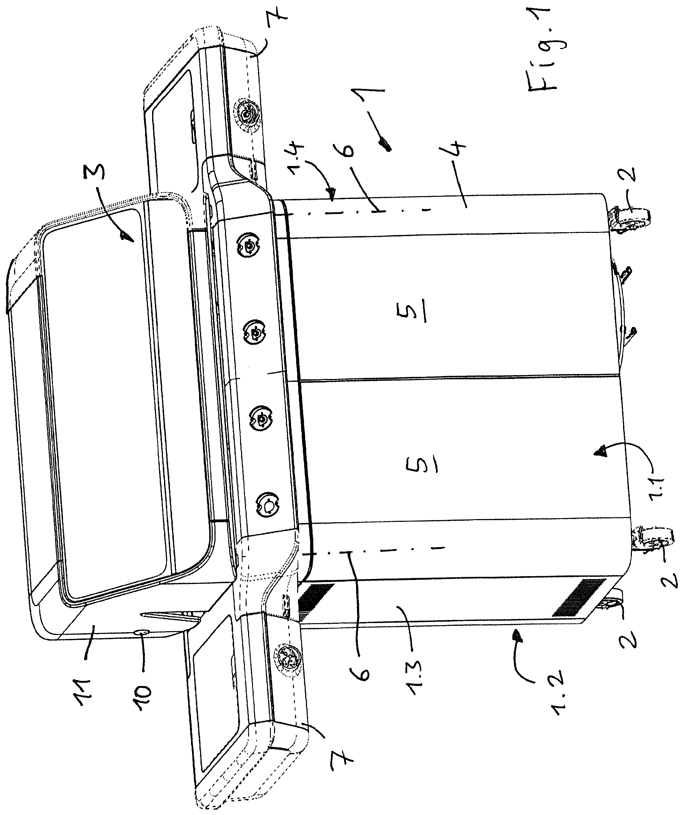

In der Figur 1 ist ein Outdoor-Gasgrill gezeigt, der ein Untergestell 1 mit einer Vorderseite 1.1, einer Rückseite 1.2 und zwei einander entgegengesetzten Außenseiten 1.3, 1.4 aufweist, die senkrecht zur Vorderseite 1.1 und zur Rückseite 1.2 angeordnet sind.

Das Untergestell 1 ist auf Rädern 2 verfahrbar, wobei im gezeigten Ausführungsbeispiel an allen vier unteren Ecken des Untergestells 1 jeweils ein Rad 2 vorgesehen ist. Gemäß einer alternativen Ausführungsform könnten auch nur zwei Räder 2 im Bereich nur einer Außenseite 1.3, 1.4 vorgesehen sein und im Bereich der anderen Außenseite 1.3, 1.4 wenigstens ein, zwei oder mehrere Füße, sodass der Outdoor-Gasgrill durch Anheben der Außenseite 1.3, 1.4 mit dem wenigstens einen Fuß schubkarrenartig mit den gegenüberliegenden Rädern 2 verfahrbar ist. Insbesondere können zwei Räder 2, beispielsweise auf einer der Außenseiten 1.3, 1.4, um eine Vertikalachse verschwenkbar sein und die anderen beiden Räder 2 können drehfest um eine Vertikalachse angeschlossen sein.

Auf dem Untergestell 1 ist ein Garraum 3 angeordnet, der hier durch eine Haube 11 abgedeckt ist, die über eine Horizontalachse 10 nach oben hinten verschwenkt werden kann, um einen Zugriff auf den Garraum zu ermöglichen. Die Haube 11 weist beispielsweise ein Sichtfenster auf, das den Blick von vorne in den Garraum 3 freigibt.

An den beiden Außenseiten 1.3, 1.4 des Untergestells 1 ist jeweils ein Seitentisch 7 vorgesehen, wobei ein solcher Seitentisch 7 nur eine Abstellfunktion haben kann oder Aufhängungen für Grillutensilien haben kann oder eine Gareinrichtung, wie einen Seitenkocher oder einen Seitengrill, umfassen kann.

Im gezeigten Ausführungsbeispiel sind auf der Vorderseite 1.1 des Untergestells 1 zwei Schwingtüren 5 vorgesehen, die einen Zugang zu dem durch das Untergestell 1 gebildeten Schrank 4 ermöglichen. Die Schwingtüren 5 sind jeweils um eine Vertikalachse 6 seitlich nach außen verschwenkbar, um den Zugang zu dem Innenraum des Schranks 4 freizugeben. Anstelle von zwei Schwingtüren 5 könnte auch eine einzige die Vorderseite 1.1 abdeckende Schwingtüre 5 vorgesehen sein.

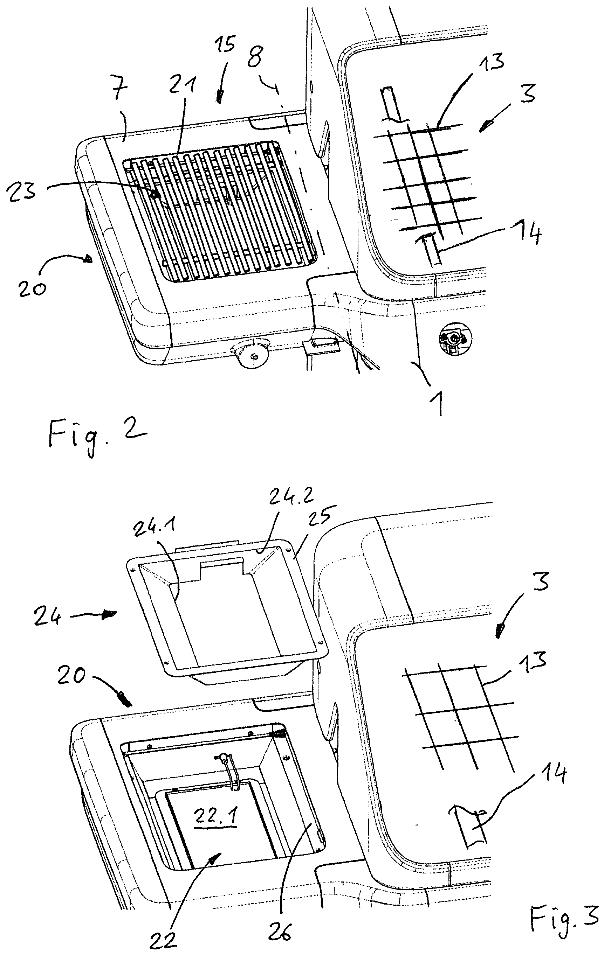

In den Figuren 2 und 3 ist ein Seitentisch 7 des Outdoor-Grills näher gezeigt. Der Seitentisch 7 ist um eine Horizontalachse 8 nach oben verschwenkbar aus einer Gebrauchsposition in eine Verstauposition gelenkig am Untergestell 1 angeschlossen. Wie sich insbesondere aus der Figur 3 ergibt, ist im Seitenteil 7 ein Infrarotbrenner 20 vorgesehen, um seitlich neben der ersten Grillfläche 13 im Garraum 3 eine zweite Grillfläche 15 auszubilden, die durch den Grillrost 21 über dem Infrarotbrenner 20 zur Verfügung gestellt wird, siehe die Figur 2.

Der Infrarotbrenner 20 umfasst einen infrarotwärmeabstrahlenden Thermoblock 22, aus einem Keramikmaterial. Die Thermoblockoberseite 22.1 ist dem Grillrost 21 zugewandt.

Die vom Grillrost 21 überdeckte Fläche 23 ist größer als die Thermoblockoberseite 22.1. Um trotzdem sämtliches vom Grillrost 21 heruntertropfendes Fett sicher auf die Thermoblockoberseite 22.1, die eine Temperatur von 600° C, 700° C, 800° C oder mehr aufweist, zu leiten, ist zwischen dem Grillrost 21 und dem Thermoblock 22 der Trichter 24 vorgesehen, der eine dem Thermoblock 22 zugewandte, untere Austrittsfläche 24.1 aufweist und eine dem Grillrost 21 zugewandte, obere Eintrittsfläche 24.2 aufweist. Die Austrittsfläche 24.1 ist kleiner als die Eintrittsfläche 24.2. Die Eintrittsfläche 24.2 ist wenigstens so groß wie die vom Grillrost 21 abgedeckte Fläche 23. Die Austrittsfläche 24.1 ist höchstens so groß wie die Thermoblockoberseite 22.1.

Der Trichter 24 weist am oberen Ende einen radial nach außen vorstehenden umlaufenden Rand 25 auf, mit welchem er im Seitentisch 7 auf einen entsprechend gegengerichteten Rand 26, der insbesondere gegenüber einer Oberseite des Seitentischs 7 zurückversetzt ist, aufgelegt werden kann. Der Grillrost 21 kann dann unmittelbar auf den Rand 25 des Trichters 24 aufgelegt werden.

### Bezugszeichenliste

- 1: Untergestell
- 1.1: Vorderseite
- 1.2: Rückseite
- 1.3: Außenseite
- 1.4: Außenseite
- 2: Rad
- 3: Garraum
- 4: Schrank
- 5: Schwingtüre
- 6: Vertikalachse
- 7: Seitentisch
- 8: Horizontalachse
- 10: Horizontalachse
- 11: Haube
- 13: erste Grillfläche
- 14: Hauptbrenner
- 15: zweite Grillfläche
- 20: Infrarotbrenner
- 21: Grillrost
- 22: Thermoblock
- 22.1: Thermoblockoberseite
- 23: Fläche
- 24: Trichter
- 24.1: Austrittsfläche
- 24.2: Eintrittsfläche
- 25: Rand
- 26: Rand

## Patentansprüche

1. Outdoor-Grill, insbesondere Outdoor-Gasgrill,
mit wenigstens einem Infrarotbrenner (20) und einem über dem
Infrarotbrenner (20) angeordneten Grillrost (21); wobei der Infrarotbrenner (20) einen infrarotwärmeabstrahlenden Thermoblock (22) aufweist, der unter dem Grillrost (21) mit einer dem Grillrost (21) zugewandten Thermoblockoberseite (22.1) positioniert ist, wobei eine Fläche der Thermoblockoberseite (22.1) kleiner als eine vom Grillrost (21) überdeckte Fläche (23) ist; wobei der Outdoor-Grill ein Untergestell (1) und einen auf dem Untergestell (1) angeordneten Garraum (3) umfasst;
**dadurch gekennzeichnet, dass**
zwischen dem Grillrost (21) und dem Thermoblock (22) ein Trichter (24) vorgesehen ist, der sich in Richtung vom Grillrost (21) zum Thermoblock (22) verjüngt und eine dem Thermoblock (22) zugewandte Austrittsfläche (24.1) aufweist, die gleich oder kleiner als die Fläche der Thermoblockoberseite (22.1) ist und vollständig von der Thermoblockoberseite (22.1) überdeckt wird; wobei
der Infrarotbrenner (20) in einem aus einer horizontalen Gebrauchsposition in eine im Wesentlichen vertikale Verstauposition verschwenkbaren Seitentisch (7) angeordnet ist, der gelenkig um eine Horizontalachse (8) zumindest mittelbar am Untergestell (1) angeschlossen ist.

2. Outdoor-Grill gemäß Anspruch 1, **dadurch gekennzeichnet, dass** der Trichter (24) eine dem Grillrost (21) zugewandte Eintrittsfläche (24.2) aufweist, die größer oder gleich der vom Grillrost (21) überdeckten Fläche (23) ist.

3. Outdoor-Grill gemäß einem der Ansprüche 1 oder 2, **dadurch gekennzeichnet, dass** der Trichter (24) den Thermoblock (22) im Bereich der Austrittsfläche (24.1) kontaktiert.

4. Outdoor-Grill gemäß einem der Ansprüche 1 bis 3, **dadurch gekennzeichnet, dass** der Thermoblock (22) aus Keramik hergestellt ist und eine Vielzahl von brenngasdurchströmten Kanälen aufweist.

5. Outdoor-Grill gemäß einem der Ansprüche 1 bis 4, **dadurch gekennzeichnet, dass** der Trichter (24) und insbesondere der Grillrost (21) herausnehmbar im Outdoor-Grill eingesetzt ist/sind.

6. Outdoor-Grill gemäß einem der Ansprüche 1 bis 5, **dadurch gekennzeichnet, dass** der Outdoor-Grill frei von einer unter dem Thermoblock (22) positionierten herausnehmbaren Fettauffangwanne ist.

7. Outdoor-Grill gemäß einem der Ansprüche 1 bis 6, **dadurch gekennzeichnet, dass** im Garraum (3) wenigstens ein Hauptbrenner (14) unter einer ersten Grillfläche (13) vorgesehen ist und der Grillrost (21) eine zweite Grillfläche (15) ausbildet.

8. Outdoor-Grill gemäß einem der Ansprüche 1 bis 7, **dadurch gekennzeichnet, dass** der Trichter (24) eine rechteckige Austrittsfläche (24.1) und insbesondere eine rechteckige Eintrittsfläche (24.2) aufweist.

9. Outdoor-Grill gemäß einem der Ansprüche 1 bis 8, **dadurch gekennzeichnet, dass** der Trichter (24) aus einem geschirrspülmaschinenfesten Material hergestellt ist oder vollumfänglich mit einem solchen beschichtet ist.

10. Outdoor-Grill gemäß einem der Ansprüche 1 bis 9, **dadurch gekennzeichnet, dass** der Trichter (24) einen radial nach außen vorstehenden umlaufenden Rand (15) oder einzelne radial nach außen vorstehende Vorsprünge aufweist, mit welchem/welchen er im Outdoor-Grill, insbesondere im Seitentisch (7), gelagert ist.

## Claims

1. An outdoor grill, in particular an outdoor gas grill,
having at least one infrared burner (20) and one grill rack (21) arranged above the infrared burner (20); wherein
the infrared burner (20) has a thermoblock (22), which emits infrared heat and which is positioned below the grill rack (21) with a thermoblock upper side (22.1) facing toward the grill rack (21), wherein an area of the thermoblock upper side (22.1) is smaller than an area (23) covered by the grill rack (21); wherein the outdoor grill comprises a base frame (1) and a cooking chamber (3) arranged on the base frame (1);
**characterized in that**
a funnel (24) is provided between the grill rack (21) and the thermoblock (22), which funnel tapers in the direction from the grill rack (21) toward the thermoblock (22) and has an exit area (24.1) facing toward the thermoblock (22), which is equal to or smaller than the area of the thermoblock upper side (22.1) and is completely covered by the thermoblock upper side (22.1); wherein the infrared burner (20) is arranged in a side table (7), which is pivotable from a horizontal usage position into a substantially vertical storage position, and which is at least indirectly connected to the base frame (1) in a manner articulated around a horizontal axis (8).

2. The outdoor grill as claimed in claim 1, **characterized in that** the funnel (24) has an entry area (24.2) facing toward the grill rack (21), which is larger than or equal to the area (23) covered by the grill rack (21).

3. The outdoor grill as claimed in either one of claims 1 or 2, **characterized in that** the funnel (24) contacts the thermoblock (22) in the area of the exit area (24.1).

4. The outdoor grill as claimed in any one of claims 1 to 3, **characterized in that** the thermoblock (22) is produced from ceramic and has a plurality of channels through which combustion gas flows.

5. The outdoor grill as claimed in any one of claims 1 to 4, **characterized in that** the funnel (24) and in particular the grill rack (21) is/are inserted removably in the outdoor grill.

6. The outdoor grill as claimed in any one of claims 1 to 5, **characterized in that** the outdoor grill is free of a removable grease collection tray positioned below the thermoblock (22).

7. The outdoor grill as claimed in any one of claims 1 to 6, **characterized in that** at least one main burner (14) is provided below a first grill surface (13) in the cooking chamber (3) and the grill rack (21) forms a second grill surface (15).

8. The outdoor grill as claimed in any one of claims 1 to 7, **characterized in that** the funnel (24) has a rectangular exit area (24.1) and in particular a rectangular entry area (24.2).

9. The outdoor grill as claimed in any one of claims 1 to 8, **characterized in that** the funnel (24) is produced from a dishwasher-safe material or is coated over its entirety using such a material.

10. The outdoor grill as claimed in any one of claims 1 to 9, **characterized in that** the funnel (24) has a circumferential edge (15) protruding radially outward or individual projections protruding radially outward, using which it is mounted in the outdoor grill, in particular in the side table (7).

## Revendications

1. Barbecue d'extérieur, en particulier barbecue d'extérieur à gaz, avec au moins un brûleur à infrarouges (20) et un gril (21) disposé par-dessus le brûleur à infrarouges (20), dans lequel le brûleur à infrarouges (20) comporte un bloc thermique (22) émettant de la chaleur par infrarouges, qui est placé sous le gril (21) avec une face supérieure de bloc thermique (22.1) tournée vers le gril (21), une aire de la face supérieure du bloc thermique (22.1) étant plus petite qu'une aire (23) couverte par le gril (21), le barbecue d'extérieur comprenant un châssis (1) et un espace de cuisson (3) disposé sur le châssis,
**caractérisé en ce qu'**est prévue entre le gril (21) et le bloc thermique (22) une trémie (24) qui se resserre du gril (21) vers le bloc thermique (22) et qui présente une aire de sortie (24.1) tournée vers le bloc thermique (22) qui est égale ou inférieure à l'aire de la face supérieure du bloc thermique (22.1) et qui est complètement couverte par la face supérieure du bloc thermique (22.1), le brûleur à infrarouges (20) étant disposé sur une tablette latérale (7) qui peut pivoter d'une position de service horizontale à une position de rangement sensiblement verticale et qui est raccordée au moins indirectement au châssis (1) de façon articulée autour d'un axe horizontal (8).

2. Barbecue d'extérieur selon la revendication 1, **caractérisé en ce que** la trémie (24) comporte une aire d'entrée (24.2) tournée vers le gril qui est supérieure ou égale à l'aire (23) couverte par le gril (21).

3. Barbecue d'extérieur selon l'une des revendications 1 ou 2, **caractérisé en ce que** la trémie (24) vient en contact avec le bloc thermique (22) dans la région de l'aire de sortie (24.1).

4. Barbecue d'extérieur selon l'une des revendications 1 à 3, **caractérisé en ce que** le bloc thermique (22) est fait de céramique et présente un grand nombre de canaux parcourus par des gaz de combustion.

5. Barbecue d'extérieur selon l'une des revendications 1 à 4, **caractérisé en ce que** la trémie (24) et en particulier le gril (21) est insérée/sont insérés dans le barbecue d'extérieur de façon amovible.

6. Barbecue d'extérieur selon l'une des revendications 1 à 5, **caractérisé en ce que** le barbecue d'extérieur ne comporte pas de bac collecteur de graisse amovible placé sous le bloc thermique (22).

7. Barbecue d'extérieur selon l'une des revendications 1 à 6, **caractérisé en ce qu'**au moins un brûleur principal (14) est prévu dans l'espace de cuisson (3) sous une première surface de gril (13) et le gril (21) forme une deuxième surface de gril (15).

8. Barbecue d'extérieur selon l'une des revendications 1 à 7, **caractérisé en ce que** la trémie (24) présente une aire de sortie (24.1) rectangulaire et en particulier une aire d'entrée (24.2) rectangulaire.

9. Barbecue d'extérieur selon l'une des revendications 1 à 8, **caractérisé en ce que** la trémie (24) est faite d'un matériau résistant au lave-vaisselle ou entièrement revêtue d'un tel matériau.

10. Barbecue d'extérieur selon l'une des revendications 1 à 9, **caractérisé en ce que** la trémie (24) présente un bord (15) périphérique en saillie vers l'extérieur dans le sens radial ou des saillies séparées dépassant vers l'extérieur dans le sens radial, avec lequel/lesquelles elle est supportée dans le barbecue d'extérieur, en particulier dans la tablette latérale (7).
